# EUROPEAN PATENT APPLICATION

(11) **EP 4 576 506 A1**
(43) Date of publication of application: **25.06.2025**
(21) Application number: 23882871.9
(22) Date of filing: 28.08.2023
(51) Int. Cl.: H02K 1/2791, H02K 1/28, H02K 15/03, H02K 15/16, F04B 35/04

(54) **MOTOR FOR COMPRESSOR, METHOD FOR MANUFACTURING MOTOR FOR COMPRESSOR, AND REFRIGERATOR COMPRISING MOTOR FOR COMPRESSOR**

(30) Priority: 26.10.2022 KR 20220139044
(71) Applicant: Samsung Electronics Co., Ltd., Suwon-si, Gyeonggi-do 16677 (KR)
(72) Inventor: HWANG, Incheol, Suwon-si, Gyeonggi-do 16677 (KR); PARK, Jungwoo, Suwon-si, Gyeonggi-do 16677 (KR)
(74) Representative: Walaski, Jan Filip
(86) International application number: PCT/KR2023/012707
(87) International publication number: WO 2024/090764

(57) **Abstract**

A motor for a compressor, according to one embodiment of the present disclosure, may comprise one or more magnets. The motor may comprise a rotor core having a plurality of magnet support structures, which define one or more magnet-mounting spaces, disposed on the inner circumferential surface of the rotor core. The motor may comprise a rotor housing that is injection molded to be integrally coupled to the magnets and the rotor core. Each of the magnet-mounting spaces may have one of the magnets inserted and arranged along a first direction. Each of the magnet support structures may have, on the inner side thereof, a pass hole through which resin flows during the injection molding of the rotor housing.

## Description

### [Technical Field]

Embodiments of the disclosure relate to a motor for a closed compressor including a structure that prevents escape-off of a magnet provided in a rotor.

### [Background Art]

In general, a compressor is one of the components of a refrigeration cycle device and is a device that compresses a refrigerant at high temperature and high pressure and delivers it to the condenser. For example, the compressor may be provided in a home appliance such as a home refrigerator.

The compressor may be classified into various types depending on the compression method and sealing structure. For example, closed compressors may be divided into reciprocating compressors, scroll compressors, and rotary compressors. A closed compressor may include a compression mechanism unit for compressing the refrigerant and an electric mechanism unit (e.g., a motor) for driving the compression mechanism unit.

Motors are classified into several types depending on the driving method. Generally, capability-variable compressors mainly used among the compressors adopt a brushless motor and include an inverter controlled by a controller. In this case, the capability-variable compressors commonly adopt a method for driving the motor by applying the voltage generated by the switching operation of a switching element provided in the inverter to the motor windings (e.g., coils).

Typically, a motor may include a stator and a rotor. The rotor may include a rotor core and a magnet, and may be configured to interact electromagnetically with the stator having a coil. The rotor may be rotated by the force acting between the magnetic field by the rotor's magnet and the current flowing through the coil of the stator.

Depending on the structure in which the magnet is disposed, the rotor is largely divided into a surface mounted permanent magnet (SPM) type in which the magnet is fixed to the surface of the rotor core and an interior mounted permanent magnet (IPM) type in which the magnet is embedded and fixed in the rotor core. Further, SPM-type rotors include an inner-rotor type in which the rotor is positioned inside the stator and an outer-rotor type in which the rotor is disposed outside the rotor.

### [Detailed Description of the Invention]

### [Solution to Problem]

Typically, the SPM-type rotor is manufactured by insert molding in which a resin is injected into the insert-molding molds where the rotor core and magnet are disposed and injection-molded. If it is impossible to fix the magnet onto the surface of the rotor core from outside the injection molding molds during insert molding, by the structure of the SPM-type rotor, injection molding may be performed after inserting the rotor core into the injection molds and then inserting each magnet into the respective position.

Various embodiments of the disclosure may provide a motor for a compressor in which a structure for preventing escape-off of the magnet is provided in the rotor core to fix the magnet onto the surface of the rotor core from outside the injection molds during insert molding.

A motor for a compressor according to an embodiment of the disclosure may include one or more magnets. The motor may include a rotor core on an inner circumferential surface of which a plurality of magnet support structures defining one or more magnet mounting spaces are disposed. The motor may include a rotor housing that is injection-molded and integrally coupled to the magnet and the rotor core. Each of the magnets may be inserted and disposed along a first direction for each of the magnet mounting spaces. Each of the magnet support structures may include a pass hole therein, through which a resin flows during injection molding of the rotor housing.

In an embodiment of the disclosure, each of the magnet support structures may be configured to surround at least a portion of the magnet to prevent the magnet disposed in the magnet mounting spaces from escaping off the inner circumferential surface of the rotor core.

In an embodiment of the disclosure, at least one of the magnet support structures may have a 1-1th part extending along the first direction and a hooked portion protruding from an end portion of the 1-1th part, configured to at least partially surround a side surface extending along the first direction, of the magnet disposed in a magnet mounting space defined by the magnet support structures.

In an embodiment of the disclosure, the at least one of the magnet support structures may have a 1-2th part extending along the first direction and a hooked portion protruding from an end portion of the 1-2th part, configured to at least partially surround a side surface extending along the first direction, of the magnet disposed in another magnet mounting space defined by the magnet support structures.

In an embodiment of the disclosure, the hooked portion may protrudingly extend to have an inclination of 90 degrees or more with respect to the first part when viewed from thereabove along the first direction.

In an embodiment of the disclosure, at least one of the magnet support structures may include a 2-1th part configured to at least partially support a lower end with respect to the first direction, of the magnet disposed in a magnet mounting space defined by the magnet support structure.

In an embodiment of the disclosure, the at least one of the magnet support structures may include a 2-2th part configured to at least partially support a lower end with respect to the first direction, of the magnet disposed in another magnet mounting space defined by the magnet support structure.

In an embodiment of the disclosure, the rotor core may include a first core portion constituting an upper portion of the rotor core and a second core portion constituting a lower portion of the rotor core. The first core portion may include one or more first magnet support structure defining a boundary along the first direction, of each of the magnet mounting spaces. The second core portion may include one or more second magnet support structure defining a lower boundary in a direction perpendicular to the first direction, of each of the magnet mounting spaces.

In an embodiment of the disclosure, the first core portion may have a coupling protrusion or a coupling recess for each first magnet support structure, and the second core portion may have a structure having a shape couplable to the coupling protrusion or the coupling recess for each second magnet support structure.

In an embodiment of the disclosure, each of the first magnet support structures may correspond to a respective second magnet support structure so that a pass hole formed inside the first magnet support structure and a pass hole formed inside the corresponding second magnet support structure are disposed to communicate with each other.

In an embodiment of the disclosure, the rotor housing may be injection-molded by insert molding.

A method for manufacturing a motor for a compressor, according to an embodiment of the disclosure, may comprise inserting and mounting each of magnets in each of a plurality of magnet mounting spaces defined along an inner circumferential surface of a rotor core. The method for manufacturing the motor may comprise inserting the rotor core having the magnets mounted therein into an injection mold. The method for manufacturing the motor may comprise inserting a bushing into the injection mold. The method for manufacturing the motor may comprise injecting a resin into the injection mold to integrally couple the rotor core, the plurality of magnets, and the bushing. Each of the plurality of magnet mounting spaces may be defined by a plurality of magnet support structures formed on the inner circumferential surface of the rotor core. The plurality of magnet support structures, respectively, may include pass holes thereinside. Injecting the resin into the injection mold may include injecting the resin into the injection mold includes allowing the injected resin to flow through the respective pass holes of the plurality of magnet support structures.

In an embodiment of the disclosure, the rotor core may include a first core portion constituting an upper portion of the rotor core and a second core portion constituting a lower portion of the rotor core. The plurality of magnet support structures may include a first magnet support structure provided in the first core portion and a second magnet support structure provided in the second core portion.

In an embodiment of the disclosure, the first core portion may have a coupling protrusion or a coupling recess for each first magnet support structure, and the second core portion may have a structure having a shape couplable to the coupling protrusion or the coupling recess for each second magnet support structure.

In an embodiment of the disclosure, each of the first magnet support structures may correspond to a respective second magnet support structure so that a pass hole formed inside the first magnet support structure and a pass hole formed inside the corresponding second magnet support structure are disposed to communicate with each other.

According to an embodiment of the disclosure, by the magnet support structure formed on the inner circumferential surface of the rotor core, the magnet may be fixedly disposed without escaping off at each predetermined position on the rotor core even before injection molding. Therefore, without the need for individually putting each of the components of the rotor, such as rotor core and magnet, into the injection mold during insert molding, the components may be first coupled from outside the injection mold and then put into the injection mold integrally. Therefore, the productivity of the rotor may be enhanced by reducing the time required for insertion for each component and overcoming the problem that the total productivity is limited to the number of cavities in the injection mold.

According to an embodiment of the disclosure, when producing a rotor through insert molding, each magnet is matched and disposed in the area defined by each magnet support structure formed on the inner circumferential surface of the rotor core, and resin may flow through a pass hole provided in the inner circumferential surface of the rotor core. This may prevent generation of a bur due to penetration of the resin into the gap between the components of the rotor, enhancing the quality of the rotor and a motor including the rotor.

Effects of the present invention are not limited to the foregoing, and other unmentioned effects would be apparent to one of ordinary skill in the art from the following description. In other words, unintended effects in practicing embodiments of the disclosure may also be derived by one of ordinary skill in the art from example embodiments of the disclosure.

### [Brief Description of the Drawings]

FIG. 1 is a perspective view illustrating a motor according to an embodiment;
FIG. 2 is an exploded perspective view illustrating a motor according to an embodiment;
FIG. 3 is a perspective view illustrating an outer appearance of the rotor of FIG. 1;
FIG. 4 is an exploded perspective view illustrating the rotor of FIG. 3;
FIG. 5 is a side view illustrating the rotor of FIG. 3;
FIG. 6 is a cross-sectional view of a rotor, taken along line A-A of FIG. 5;
FIG. 7 is a cross-sectional view of a rotor, taken along line B-B of FIG. 5;
FIG. 8 is a flowchart illustrating a method for manufacturing a motor according to an embodiment; and
FIG. 9 is a functional block diagram schematically illustrating a configuration of a refrigerator according to an example, in terms of functions and controls.

In connection with the description of the drawings, the same or similar reference numerals may be used to denote the same or similar elements.

### [Mode for the Invention]

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, such terms as "1st" and "2nd," or "first" and "second" may be used to simply distinguish a corresponding component from another, and does not limit the components in other aspect (e.g., importance or order).

When a (e.g., first) component is mentioned as "coupled to," "connected to," "supported by," or "contacting" another (e.g., second) component with or without the terms "functionally" or "communicatively," the component may be directly or indirectly coupled to, connected to, supported by, or contact the other component.

It will be further understood that the terms "comprise" and/or "have," as used herein, specify the presence of stated features, integers, steps, operations, elements, and/or components, but do not preclude the presence or addition of one or more other features, integers, steps, operations, elements, components, and/or groups thereof. Throughout the specification, when one component is positioned "on" another component, the first component may be positioned directly on the second component, or other component(s) may be positioned between the first and second component.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation.

The terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments, but should rather be appreciated as covering all various modifications, equivalents, and/or substitutes of various embodiments. With regard to the description of the drawings, similar reference numerals may be used to refer to similar or related elements.

Hereinafter, various embodiments of the disclosure are described in detail with reference to the accompanying drawings.

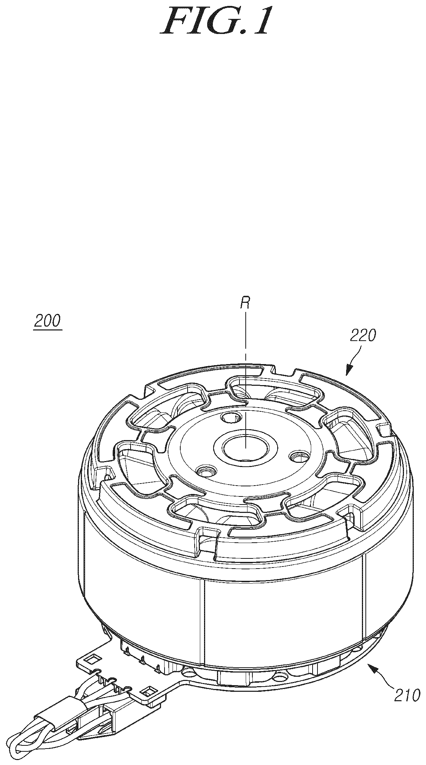

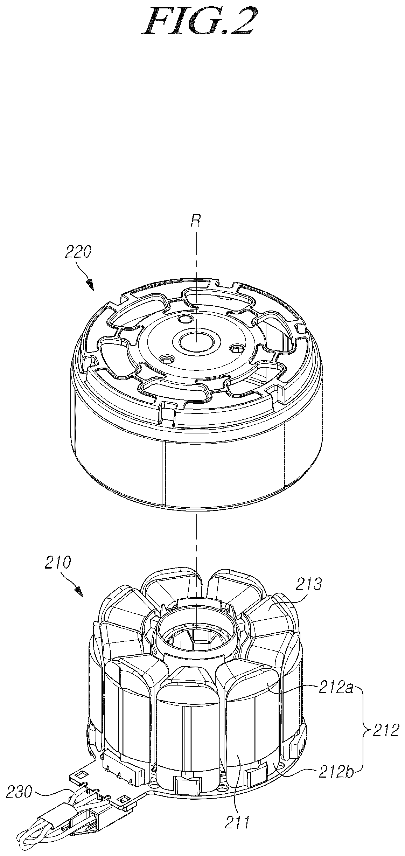

FIG. 1 is a perspective view illustrating a motor according to an embodiment. FIG. 2 is an exploded perspective view illustrating a motor according to an embodiment.

According to an embodiment, the motor 200 may include a rotor 210, a stator 220, and a power supply part 230.

As shown, in the motor 200 according to an embodiment, the stator 210 is positioned in the center and the rotor 220 is positioned to surround the outer circumferential surface of the stator 210. The motor 200 may correspond to an outer-rotor type motor 200 in which the rotor 220 rotates along a circumferential direction surrounding the outer circumferential surface of the stator 210. In the case of the outer-rotor type motor 200, as compared with the inner-rotor type motor, the circumferential diameter of the rotor 220 may be relatively larger than the circumferential diameter of the rotor of the inner-rotor type motor, and thus the torque density or output density may be higher than the inner-rotor type motor.

In one embodiment, the motor 200 may correspond to a permanent magnet synchronous motor in which the rotor 220 includes one or more permanent magnets (hereinafter referred to as magnets). Further, the above motor 200 may be implemented in a surface mounted permanent magnet (SPM) type in which one or more magnets are fixed in tight contact with the surface of the rotor core 221 to be described below.

According to an embodiment, the stator 210 may be disposed inside the rotor 220. In an embodiment, the stator 210 may be configured by stacking a plurality of steel sheets. In an embodiment, the stator 210 may be electrically connected to the power supply part 230. In an embodiment, the stator 210 may be configured to have an annular structure.

According to an embodiment, as shown in FIG. 2, the stator 210 may include a stator core 211, an insulator 212, and a coil 213.

In an embodiment, the insulator 212 may be configured to surround at least a portion of the stator core 211. The insulator 212 may substantially form the entire appearance of the stator 210. The insulator 212 may be formed of an insulation material. The insulator 212 may correspond to, e.g., an injection molded article formed using an insulating resin such as plastic. In this case, the insulator 212 may insulate between the stator core 211 and the coil 213 to prevent current loss.

In an embodiment, the insulator 212 may include an upper insulator 212a and a lower insulator 212b. In an embodiment, the upper insulator 212a may form an upper exterior of the stator 210. The upper insulator 212a may be configured to surround an upper portion of the stator core 211. The upper insulator 12a may be, e.g., formed in a shape corresponding to an upper portion of the stator core 211. In an embodiment, the lower insulator 212b may form a lower exterior of the stator 210. The lower insulator 212b may be configured to surround a lower portion of the stator core 211. The lower insulator 212b may be formed, e.g., in a shape corresponding to a lower portion of the stator core 211.

In an example, the stator core 211 may be formed by press-processing and stacking metal plates. In an example, the stator core 211 may form a path of a magnetic flux through which a magnetic field passes.

In an embodiment, the coil 213 may be wound on the insulator 212 to surround the stator core 211 and/or the insulator 212. The coil 213 may be formed by, e.g., repeatedly winding a conductive wire on the outer circumferential surface of the insulator 212. The coil 213 may be formed on the outer circumferential surface of the insulator 212 in a form in which a conductive plate surrounds the stator core 211, for example. In an embodiment, the coil 213 may be configured as a three-phase coil group. The coil 213 may receive an alternating current from the power supply part 230.

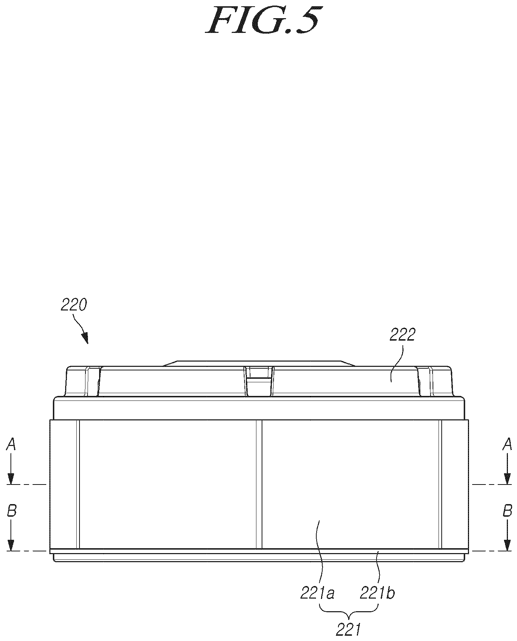

According to an embodiment, the rotor 220 may be disposed outside the stator 210. In an embodiment, the rotor 220 may be configured to surround the stator 210. In an embodiment, the rotor 220 may substantially form the overall appearance of the motor 200. In an embodiment, the rotor 220 may be configured to interact electromagnetically with the stator 210. In this case, the rotor 220 may rotate around the rotation axis R by an electromagnetic force acting between the magnetic field by the magnets provided in the rotor 220 and the current flowing through the coil 213 of the stator 210. Hereinafter, a detailed structure of the rotor 220 is described below with reference to the drawings of FIGS. 5 to 9.

According to an embodiment, the power supply part 230 may be connected to an external power source to receive power from the external power source. In this case, the power supply part 230 may apply current to the motor 200. The power supply part 230 may apply an alternating current to the coil 213 of the stator 210, for example.

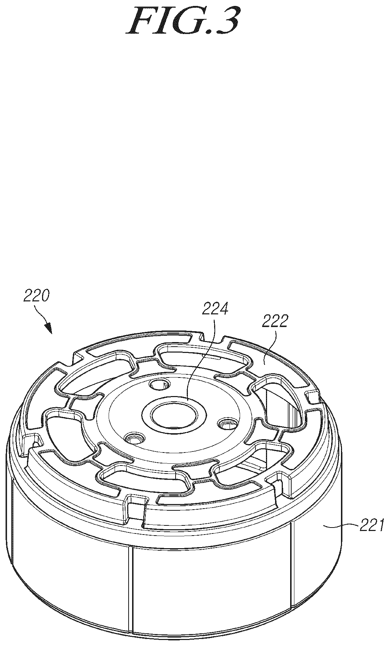

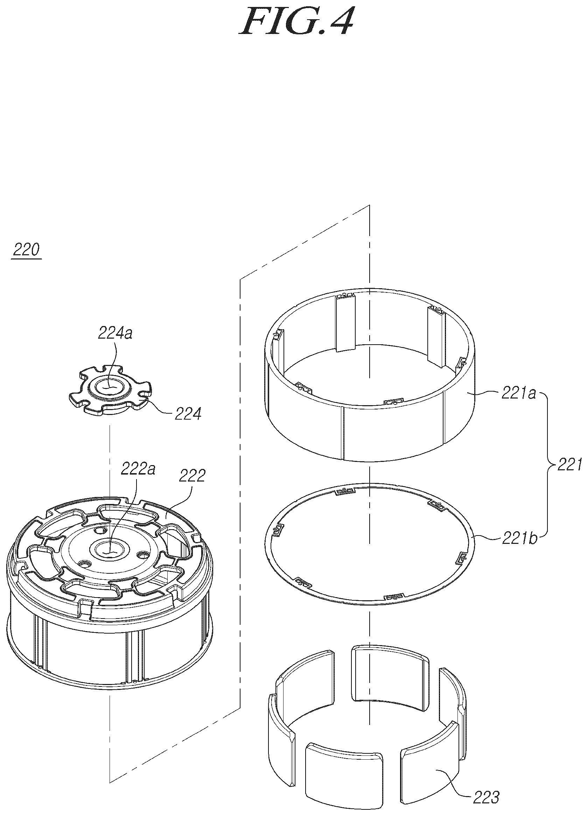

FIG. 3 is a perspective view illustrating an outer appearance of a rotor according to an example. FIG. 4 is an exploded perspective view illustrating the rotor of FIG. 3.

The rotor 220 illustrated in FIGS. 3 and 4 may correspond to the rotor 220 illustrated in FIGS. 1 and 2. Referring to FIGS. 3 and 4, in an embodiment, the rotor 220 may include a rotor core 221, a rotor housing 222, a plurality of magnets 223, and a bushing 224.

According to an embodiment, the rotor core 221 may form a side exterior of the rotor 220. In an embodiment, the rotor core 221 may be configured to have a substantially cylindrical shape. The rotor core 221 may have, e.g., a hollow portion in which the stator 210 is inserted and disposed.

The rotor core 221 may be disposed outside the stator 210 disposed in the hollow portion therein to form a path of a magnetic flux through which the magnetic field passes. In an example, the rotor core 221 may be formed by press-processing and stacking metal plates.

According to an embodiment, the rotor core 221 may include a first core 221a and a second core 221b.

According to an embodiment, the first core 221a may form an overall side exterior of the rotor core 221. The first core 221a may be disposed above the second core 221b. The first core 221a may be configured to have a substantially cylindrical shape. The first core 221a may have a hollow portion therein and extend in the vertical direction, for example.

According to an embodiment, the second core 221b may be configured to have a substantially annular shape. The second core 221b may constitute a lower end of the rotor core 221. The second core 221b may be disposed under the first core 221a. The height of the second core 221b may be smaller than the height of the first core 221a, but is not limited thereto. In some embodiments, the first core 221a and the second core 221b may be integrally formed.

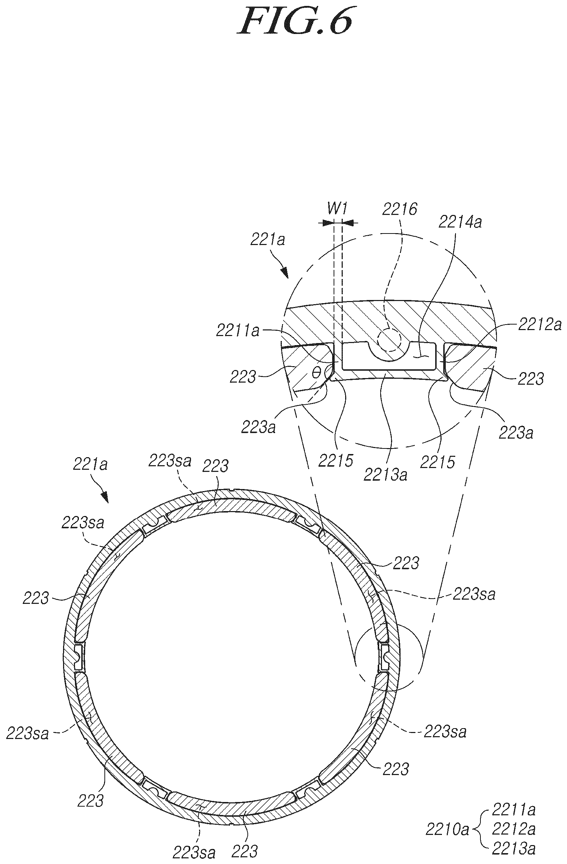

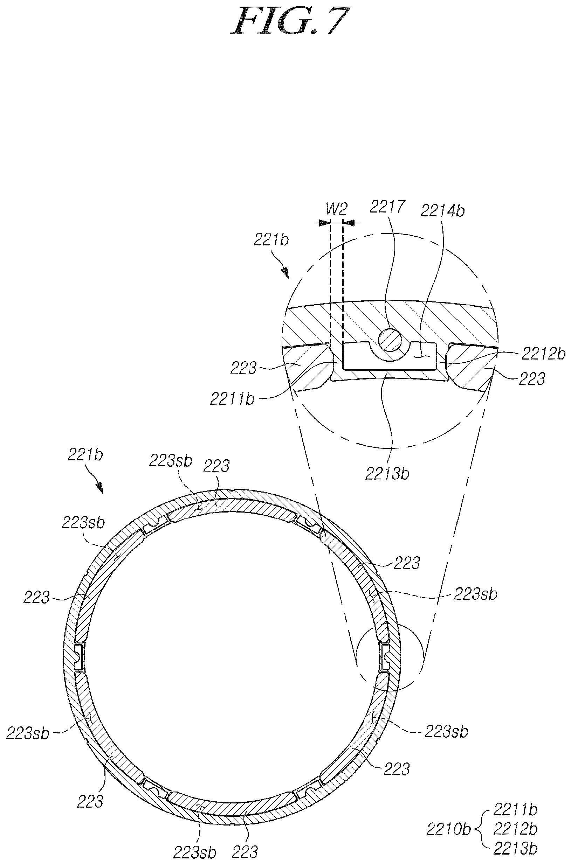

The rotor core 221 may include a plurality of magnet support structures 2210a and 2210b configured to accommodate and support each of the plurality of magnets 223 on the inner circumferential surface of the rotor core 221, as described below. Each magnet mounting space may be formed between neighboring magnet support structures among the plurality of magnet support structures 2210a and 2210b. The rotor core 211 and the magnet mounting spaces 223sa and 223sb formed in the inner circumferential surface of the rotor core 211 are described in detail with reference to FIGS. 6 and 7.

According to an embodiment, the rotor housing 222 may be configured to cover one side of the hollow portion of the rotor core 221. In an embodiment, the rotor housing 222 may integrally couple the rotor core 221, the magnet 223, and the bushing 224. In an embodiment, the rotor housing 222 may be formed by an injection molding method. The rotor housing 222 may be injection-molded using, e.g., insert molding. For example, the rotor housing 222 may be formed by injecting the resin after inserting the rotor core 221, the magnet 223, and the bushing 224 into the injection mold. The rotor housing 222 may correspond to an injection-molded article that integrally couples the rotor core 221, the magnet 223, and the bushing 224. In an embodiment, the rotor housing 222 may include a coupling hole 222a formed in the central portion. In this case, a shaft (not shown) for motor rotation is inserted through the coupling hole 222a to be coupled to the bushing 224, and the rotational force of the rotor 220 may be transferred to the shaft.

According to an embodiment, each of the plurality of magnets 223 may be disposed on the inner circumferential surface of the rotor core 221. For example, when performing insert molding, each magnet 223 may be inserted and disposed in each magnet mounting space provided on the inner circumferential surface side of the rotor core 221. In an example, the corresponding magnet 223 may be disposed in the form of press-fitting the magnet 223 from the top to bottom in each magnet mounting space of the rotor core 221. In an embodiment, each of the plurality of magnets 223 may be fixed to the rotor core 221 by being matched and supported on each of the magnet mounting spaces 223sa and 223sb defined by the magnet support structures 2210a and 2210b.

A plurality of magnets 223 may be provided. The magnet mounting spaces 223sa and 223sb may be formed on the inner circumferential surface of the rotor core 221 to be spaced apart from each other at predetermined intervals. Therefore, each of the plurality of magnets 223 may also be arranged to be spaced apart by a predetermined interval along the inner circumferential direction of the rotor core 221 on the inner circumferential surface of the rotor core 221. In an example, each magnet 223 may include rare earth elements such as ferrite, neodymium, or samarium to maintain semi-permanently high energy density magnetic properties, but the disclosure is not limited thereto.

According to an embodiment, the bushing 224 may be coupled to the rotor housing 222 at a position adjacent to the coupling hole 222a of the rotor housing 222 during insert molding. The bushing 224 may have a shaft hole that has a shape corresponding to the shaft, and through which the shaft (not shown) is inserted. In this case, the bushing 224 may be engaged with the shaft (not shown) through the shaft hole 224a.

FIG. 5 is a side view illustrating the rotor of FIG. 3. FIG. 6 is a cross-sectional view of a rotor, taken along line A-A of FIG. 5. FIG. 7 is a cross-sectional view of a rotor, taken along line B-B of FIG. 5.

Referring to FIGS. 5 to 7, in the rotor core 221, each of a plurality of magnets 223 disposed on the inner circumferential surface of the rotor core 221 is matched and disposed in the respective magnet mounting space to be prevented from escaping off the rotor core 221. As described above, the magnet mounting space may be a space formed by each of the plurality of magnet support structures 2210a and 2210b formed on the inner circumferential surface of the rotor core 221.

According to an embodiment, the magnet support structures 2210a and 2210b may be provided in the first core 221a and the second core 221b, respectively. In this case, the magnet support structure provided in the first core 221a may be referred to as a first magnet support 2210a, and the magnet support structure provided in the second core 221b may be referred to as a second magnet support 2210b.

In an embodiment, the first magnet support 2210a and the second magnet support 2210b may be formed at points corresponding to each other on the respective inner circumferential surfaces of the first core 221a and the second core 221b. In this case, when the first core 221a and the second core 221b are coupled, a lower surface of the first magnet support 2210a and an upper surface of the second magnet support 2210b may contact and be connected to each other.

According to an embodiment, the first core 221a may include a first magnet support 2210a. A plurality of first magnet support 2210a may be provided. The plurality of first magnet supports 2210a may be disposed on the inner circumferential surface of the first core 221a to be spaced apart from each other at predetermined intervals along the inner circumferential direction of the first core 221a. A magnet mounting space 223sa, which is a space in which the magnet 223 is inserted from the upper side of the rotor core 221 and mounted in the rotor core 221, may be formed between two neighboring first magnet supports 21210a of the plurality of first magnet supports 2210a. The magnet mounting space 223sa may have, e.g., a shape corresponding to at least a portion of the magnet 223 (e.g., an upper portion of the magnet 223).

According to an embodiment, as illustrated in FIG. 6, a coupling protrusion 2216 protruding downward may be formed on a lower surface of the first core 221a. A plurality of coupling protrusions 2216 may be provided. As many coupling protrusions 2216 as corresponding to the first magnet supports 2210a may be provided, for example. The coupling protrusion 2216 may be formed at a position corresponding to each of the first magnet supports 2210a.

According to an embodiment, the first magnet support 2210a may be formed to protrude substantially inside the hollow portion of the first core 221a. In an embodiment, a pass hole 2214a through which resin flows during insert molding may be formed inside the first magnet support 2210a. The pass hole 2214a may extend in the vertical direction.

According to an embodiment, the first magnet support 2210a may include a 1-1th part 2211a, a 1-2th part 2212a, and a first connection portion 2213a.

According to an embodiment, the 1-1th part 2211a may protrude from the inner circumferential surface of the first core 221a toward the center of the hollow portion of the first core 221a. The 1-1th part 2211a may be formed to extend in the vertical direction along the inner circumferential surface of the first core 221a. As shown, the 1-1th part 2211a may have a width w1.

According to an embodiment, the 1-2th part 2212a may protrude from the inner circumferential surface of the first core 221a toward the center of the hollow portion of the first core 221a. The 1-2th part 2212a may be formed to extend in the vertical direction along the inner circumferential surface of the first core 221a. The 1-2th part 2212a may be spaced apart from the 1-1th part 2211a with the pass hole 2214a interposed therebetween. In an embodiment, the 1-2th part 2212a may have the same width w1 as the 1-1th part 2211a described above.

According to an embodiment, the first connection portion 2213a may be configured to connect the 1-1th part 2211a and the 1-2th part 2212a. In this case, the 1-1th part 2211a, the 1-2th part 2212a, and the first connection portion 2213a may be provided to surround the pass hole 2214a. The pass hole 2214a may extend in the vertical direction.

In an embodiment, a hooking portion 2215 may be formed on each of two opposite side ends of the first connection portion 2213a. For example, the hooking portion 2215 may be disposed in each of an area where the first connection portion 2213a meets the 1-1th part 2211a and an area where the first connection portion 2213a meets the 1-2th part 2212a. In an embodiment, the hooking portion 2215 may be configured to prevent each magnet 223 disposed in the magnet mounting space on the side of the inner circumferential surface of the rotor core 221 from escaping off the inner circumferential surface of the rotor core 221. The hooking portion 2215 may be formed to protrude toward the magnet mounting space 223sa to surround at least a portion of the magnet 223 (e.g., an inner side portion of the magnet 223) when the magnet 223 is disposed in the magnet mounting space 223sa adjacent to the hooking portion 2215. In an embodiment, the hooking portion 2215 may be configured to, when the magnet 223 has an inclined surface 223a, have an inclination corresponding to the inclined surface 223a of the magnet 223. For example, the hooking portion 2215 may be formed to protrude toward the magnet mounting space (and the magnet 223 disposed therein) to form a predetermined angle θ with respect to the 1-1th part 2211a or the 1-2th part 2212a. In an example, the predetermined angle θ may be, e.g., an obtuse angle of 90 degrees or more. In an example, as described above, a magnet mounting space may be defined, between two adjacent first magnet supports 2210a among the plurality of first magnet supports 2210a formed in the first core 221a, by the 1-1th part 2211a on one side and the hooking portion 2215 adjacent thereto, and the 1-2th part 2212a on the other side and the hooking portion 2215 adjacent thereto. In an example, the magnet mounting space may correspond to the shape of the magnet 223 to be disposed therein and, when inserted in the corresponding space, the magnet 223 may be substantially matched and fixed.

According to an embodiment, the second core 221b may include a second magnet support 2210b. A plurality of second magnet supports 2210b may be provided. The plurality of second magnet supports 2210b may be disposed to be spaced apart from each other at predetermined intervals along the inner circumferential direction of the second core 221b on the inner circumferential surface of the second core 221b. The magnet mounting space 223sb for the magnet 223 may be formed between two neighboring second magnet supports 2210b among the plurality of second magnet supports 2210b.

According to an embodiment, as illustrated in FIG. 7, a coupling recess 2217 recessed downward may be formed in the upper surface of the second core 221b. A plurality of coupling recesses 2217 may be provided. As many coupling recesses 2217 as corresponding to, e.g., the second magnet supports 2210b may be provided. The coupling recess 2217 may be formed at a position corresponding to the second magnet support 2210b. As the coupling protrusion 2216 of the first core 221a is inserted into the coupling recess 2217, the first core 221a and the second core 221b may be integrally coupled to each other.

According to an embodiment, the second magnet support 2210b may be configured to prevent the magnet 223 mounted in the magnet support mounting space from escaping off to the lower side of the rotor core 221.

According to an embodiment, the second magnet support 2210b may be formed to protrude substantially inside the second core 221b. In an embodiment, a pass hole 2214b through which resin flows during insert molding may be formed inside the second magnet support 2210b. The pass hole 2214b may extend in the vertical direction. The pass hole 2214b of the second magnet support 2210b may communicate with the pass hole 2214a of the first magnet support 2210a. In an example, during insert molding, the resin may flow along the pass holes 2214a and 2214b of the first and second magnet supports 2210a and 2210b communicating with each other. In an example, the resin may flow through the pass hole 2214b of the second magnet support 2210b to the lower end of the rotor core 221 and the magnet 223. As such, the resin flows while being guided by the pass holes 2214a and 2214b, thereby blocking the inflow into the rotor core 221 and suppressing generation of a burr inside the rotor core 221.

According to an embodiment, the second magnet support 2210b may include a 2-1th part 2211b, a 2-2th part 2212b, and a second connection portion 2213b.

According to an embodiment, the 2-1th part 2211b may protrude from the inner circumferential surface of the second core 221b toward the center of the hollow portion of the second core 221b. The 2-1th part 2211b may be formed to extend in the vertical direction along the inner circumferential surface of the second core 221b.

According to an embodiment, the 2-2th part 2212b may protrude from the inner circumferential surface of the second core 221b toward the center of the hollow portion of the second core 221b. The 2-2th part 2212b may extend in the vertical direction along the inner circumferential surface of the second core 221b. However, if the second core 221b is formed to have an annular shape with a substantially very low height, the 2-1th part 2211b and the 2-2th part 2212b have a shape of protruding toward the center of the hollow part rather than extending substantially in the vertical direction. The 2-2th part 2212b may be spaced apart from the 2-1th part 2211b with the pass hole 2214b interposed therebetween.

According to an embodiment, the second connection portion 2213b may be configured to connect the 2-1th part 2211b and the 2-2th part 2212b. In this case, the 2-1th part 2211b, the 2-2th part 2212b, and the second connection portion 2213b may be provided to surround the pass hole 2214b.

For example, the 2-1th part 2211b and the 2-2th part 2212b may have a width w2 larger than the width w1 of the 1-1th part 2211a and the 1-2th part 2212a, and may be formed to have a constant width in the vertical direction. In such a case, each magnet 223 supported and disposed in the magnet mounting space 223sa formed by the first magnet support 2210a of the first core 221a may be supported from below by a portion of the upper surface (a portion larger than w1) of the second core 221b, i.e., an upper surface of each of the 2-1th part 2211b and the 2-2th part 2212b and be prevented from escaping off downward of the second core 221b.

In an example, the 2-1th part 2211b and the 2-2th part 2212b may be formed to have two portions with different widths along the height direction. For example, each of the 2-1th part 2211b and the 2-2th part 2212b may be configured to have the same width as the width w1 of the 1-1th part 2211a or the 1-2th part 2212a on the upper side (e.g., a side adjacent to the first core 221a) and a larger width w2 on the opposite lower side. In such a case, each magnet 223 supported and disposed in the magnet mounting space formed by the first magnet support 2210a of the first core 221a may be partially disposed in the magnet mounting space formed by the second magnet support 2210b of the second core 221b, i.e., the 2-1th part 2211b and the 2-2th part 2212b, while being supported not to escape off to the lower side of the second core 221b by the larger width w2 of the lower portion of each of the 2-1th part 2211b and the 2-2th part 2212b.

Regardless of the widths of the 2-1th part 2211b and the 2-2th part 2212b, as described above, the pass hole 2214a of the first core 221a and the pass hole 2214b of the second core 221b have corresponding cross-sectional shapes and/or positions and may be disposed to communicate with each other.

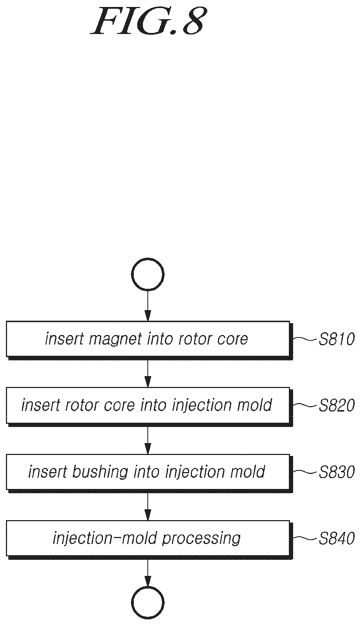

FIG. 8 is a flowchart illustrating a method for manufacturing a rotor according to an embodiment.

Referring to FIG. 8, a flow of an exemplary method for manufacturing a rotor 220 according to an injection molding method using the rotor core 221 of the above-described structure is schematically illustrated.

First, in step S810, each magnet 223 may be mounted in the respective magnet mounting space in the rotor core 221 before inserted into the injection mold (not shown). In an example, the magnet 223 may be inserted and mounted into the magnet mounting space provided in the rotor core 221 from the upper side of the rotor core 221. In the case of the rotor core 221 of the above-described structure, escape-off from the rotor core 221 may be prevented by an anti-escape structure (e.g., the magnet support structures 2210a and 2210b) provided in the rotor core 221.

In step S820, the rotor core 221 in which the magnets 223 are mounted may be inserted into each cavity in the injection mold. Then, in step S830, the bushing 224 may be inserted for each rotor core 221 in the injection mold. Subsequently, in step S840, the rotor housing 222 may be formed by injecting a resin into the injection mold. The injected resin may flow through the pass holes 2214a and 2214b of the rotor core 221, and the die-spot surface at a lower portion of the injection mold may be positioned below the configuration of the second core 221b, e.g., outside the lower portion lower than the second magnet support structure 2210b. Accordingly, the resin may be blocked from flowing into the rotor core 221 by the lower injection mold. Further, the rotor core 221, the rotor, the magnet 223, and the bushing 224 may be integrally coupled by the injection-molded rotor housing 222.

As the rotor core 221 of the structure described above with reference to FIGS. 1 to 7 is used in the method shown in FIG. 8, unlike the conventional method in which injection-molding is performed by inserting the magnet into the injection mold after inserting the rotor core into the injection mold due to difficulty in fixing the rotor core and the magnet, the rotor core 221 and the magnet 223 are integrally coupled in a preceding process before inserting the rotor core 221 into the injection mold (not shown), and then, the rotor core 221 in which the magnet 223 is mounted may be inserted into the injection mold. Therefore, according to the method shown in FIG. 8, it is possible to avoid productivity deterioration due to an increase in the time of inserting components into the mold in the conventional art and reduce C/T (cycle time) and cavity constraints required for injection-molding. As a result, the productivity of the motor may be increased and the production cost may be reduced.

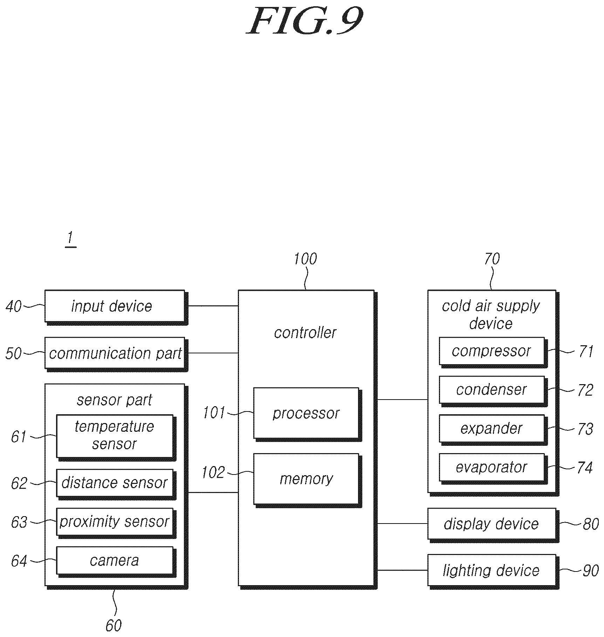

A motor including the above-described rotor 220 may be used, e.g., in a closed reciprocating compressor, but the disclosure is not limited thereto. Further, a closed reciprocating compressor having a motor including the rotor 220 of the structure described above may be applied to various electronic devices requiring a refrigeration cycle, such as a refrigerator. FIG. 9 is a view illustrating a refrigerator having a closed reciprocating compressor having a motor including a rotor 220 according to the disclosure.

FIG. 9 is a functional block diagram schematically illustrating a configuration of a refrigerator according to an example, in terms of functions and controls.

According to an embodiment, the refrigerator 1 may include an input device 40. The input device 40 may be a component for obtaining a user input for controlling the refrigerator 1.

In an example, the input device 40 may be installed on the door for user convenience. The input device 40 may include any type of user input means including one or more buttons or switches. Setting data (e.g., a desired storage chamber temperature) by the user may be input through the input device 40. For example, the input device 40 may include a touch panel that receives the user's touch input and generates an electrical signal corresponding to the received touch input, but the disclosure is not limited to a specific type of input device. In an example, the touch panel constituting the input device 40 may be formed of a transparent material that is positioned on the front surface of a separate display panel provided in the refrigerator 1 and does not distort an image displayed on the display panel. In an example, the input device 40 may include an infrared signal reception part. The user may remotely input configuration data through a remote controller, and the input configuration data may be received by the input device 40 as an infrared signal. In an example, the input device 40 may include a microphone, and configuration data by the user's voice may be obtained through the microphone.

The configuration data (e.g., a desired temperature of the storage compartment) obtained through the input device 40 may be transferred to the controller 100 described below. In an example, the configuration data obtained through the input device 40 may be transmitted to the outside through the communication part 50 described below, but the disclosure is not limited thereto.

According to an example, the refrigerator 1 may include the communication part 50 that supports signal transmission/reception to/from the outside. In an example, the communicator 50 may receive and/or transmit a wired/wireless signal to/from an external wired/wireless communication system, an external server, and/or other devices according to a predetermined wired/wireless communication protocol. In an example, the communication part 50 may include one or more modules to connect the refrigerator 1 to one or more networks. In an example, the communication part 50 may include at least one of a mobile communication module, a wired/wireless Internet module, a short-range communication module, and/or a location information module.

In an example, the communication part 50 may receive the configuration data signal input by the user on the mobile terminal of the user in the form of a wireless signal according to a predetermined wireless communication protocol. In an example, the communication part 50 may receive information and/or a command for controlling the operation of the refrigerator 1 from an external server in the form of a signal according to a predetermined wired/wireless communication protocol. The communication part 50 may transfer various received signals to the controller 100 to be described below. In an example, the communication part 50 may transmit various data generated or obtained on the refrigerator 1 in the form of a wired/wireless signal according to a predetermined wired/wireless communication protocol, e.g., to a mobile terminal of the user or an external server.

According to an example, the refrigerator 1 may include a sensor part 60. In an example, the sensor part 60 may include a temperature sensor 61, a distance sensor 62, a proximity sensor 63, and/or a camera 64. However, the types of sensors listed here are merely illustrative and the disclosure is not limited thereto.

In an example, the temperature sensor 61 may include a plurality of temperature sensors provided inside each storage compartment to detect the temperature inside the storage compartment. A plurality of temperature sensors may be installed in each of the plurality of storage compartments to detect the temperature of each of the storage compartments. The electrical signal corresponding to the detected temperature may be transferred to the controller 100. Each of the plurality of temperature sensors may include a thermistor whose electrical resistance changes according to temperature. In an example, the temperature sensor 61 may include an external temperature sensor provided outside the refrigerator 1 to detect the external temperature around the refrigerator 1.

In an example, the distance sensor 62 may measure the distance to an object, e.g., the user, positioned around the refrigerator 1. The distance sensor 62 may be, e.g., an ultrasonic sensor or an infrared sensor, but is not limited thereto. The distance sensor 62 may detect an object or user around the refrigerator 1 and transfer the detected electrical signal to the controller 100.

In an example, the proximity sensor 63 may be provided to detect opening and closing of the door. The proximity sensor 63 may detect whether the door is in contact with the main body and closes the storage compartment. A plurality of proximity sensors 63 may be installed on a plurality of doors, respectively. The proximity sensor 63 may transfer an electrical signal for the detected opening/closing state of the door to the controller 100.

In an example, the camera 64 may be installed inside each storage compartment to obtain an internal image of each storage compartment. In an example, the camera 64 may be provided outside the refrigerator 1 to obtain an image of the outside around the refrigerator 1. The camera 64 may include image sensors that capture an image and convert the image into an electrical signal. The image sensor may include, e.g., a charge-coupled device (CCD) image sensor or a complementary metal oxide semiconductor (CMOS) image sensor. The electrical signal related to the image captured by the camera 64 may be transferred to the controller 100.

According to an embodiment, the refrigerator 1 may include a cold air supply device 70. In an example, the cold air supply device 70 may include a compressor 71, a condenser 72, an expander 73, and an evaporator 74. Although not shown, the cold air supply device 70 may include a refrigerant pipe connecting the compressor 71, the condenser 72, the expander 73, and the evaporator 74. The refrigerant may circulate between the compressor 71, the condenser 72, the expander 73, and the evaporator 74 through the refrigerant pipe.

The compressor 71 may compress the refrigerant to a high temperature and high pressure state. For example, the compressor 71 may compress gaseous refrigerant at high temperature and high pressure using the rotational force of a motor (e.g., the motor 200 of FIG. 1) that rotates by receiving electrical energy from the outside. The compressor 71 is a capability-variable compressor, and vary the capacity by changing the frequency according to a driving control command. The compressor 71 may be a closed reciprocating compressor with a rotor 220 having the configuration described above with reference to FIGS. 1 to 8 and a motor 200 using the same.

The compressed refrigerant may be moved to the condenser 72 by the refrigerant pipe. The condenser 72 may condense the compressed refrigerant received from the compressor 71. The condenser 72 may dissipate heat generated while condensing the refrigerant to the outside of the condenser 72. The refrigerant condensed while passing through the condenser 72 may be transferred to the expander 73. The condensed refrigerant may be converted into a low-temperature and low-pressure liquid state while passing through the expander 73. In an example, the expander 73 may be implemented as an electronic expansion valve that may adjust the opening ratio (an electronic expansion valve that may adjust the ratio of the cross-sectional area of the valve's flow path to the cross-sectional area of the valve's flow path while fully open). In such a case, the amount of refrigerant passing through the expander 73 may be controlled depending on the opening ratio of the electronic expansion valve. In an example, the expander 73 may be implemented as a capillary device. The liquid refrigerant may pass through the expander 73 and move to the evaporator 74. The evaporator 74 may exchange heat with surrounding gas while the liquid refrigerant is evaporated. The liquid refrigerant is evaporated by the evaporator 74 to absorb the surrounding latent heat and, if the gas around the evaporator 74 is cooled accordingly, cold air may be generated. The generated cold air may be moved to the storage compartment through a flow path provided between the external case and the internal case. The refrigerant evaporated in the evaporator 74 may be moved back to the compressor 71 and circulated.

In an example, although not specifically shown, the refrigerator 1 may include a machine room in which at least some components of the cold air supply device 70 are disposed. The machine room may be configured to be partitioned and insulated from the storage compartment so as to prevent heat generated from the components disposed in the machine room from being transferred to the storage compartment. The inside of the machine room may be configured to communicate with the outside of the main body 10 to dissipate heat from components disposed inside the machine room.

According to an embodiment, the refrigerator 1 may include a display device 80. In an example, the display device 80 may be installed on the door. In an example, the display device 80 may display various setting data (e.g., a desired storage compartment temperature) obtained through the input device 40 and/or the communication part 50 from the user or the outside or operation control information about the refrigerator 1. In an example, the display device 80 may display various sensing information (e.g., one or more pieces of temperature information measured by the temperature sensor 61) obtained from the sensor part 60, the current operating state of the refrigerator 1, and/or various warning/error messages. The display device 80 may be one of various visual display means capable of displaying images, characters, numbers, or the like, including a liquid crystal display (LCD) panel, a light emitting diode (LED) panel, an organic light emitting diode (OLED) panel, a micro light emitting diode (uLED) panel, a plasma display panel, or the like, but is not limited to a specific type of display device. In an example, the display device 80 may include a speaker, and may provide each of the above-described information in the form of a voice through the speaker.

According to an embodiment, the refrigerator 1 may include a lighting device 90. The lighting device 90 may be installed in each storage compartment 20 to illuminate the inside of the corresponding storage compartment 20.

In an example, the refrigerator 1 may include a controller 100 for controlling the overall operation of the refrigerator 1. The controller 100 may include a memory 102 for storing a program and/or data for controlling each component of the refrigerator 1, and a processor 101 for generating a control signal for controlling each component of the refrigerator 1 including the cold air supply device 70 or the like according to the program and/or data stored in the memory 102 and information obtained from each of the other components.

In an example, the processor 101 of the controller 100 may receive various input/setting information, e.g., desired storage compartment temperature information, from the input device 40 and/or the communication part 50 described above. The processor 101 may obtain sensing information from the sensor part 60, such as one or more pieces of temperature information detected by the temperature sensor 62, a detection signal detected by the distance sensor 62, door opening/closing information detected by the proximity sensor 63, and/or image information detected by the camera 64. In an example, the controller 100 may obtain information about the state of the inside or outside of the storage compartment 20 of the refrigerator 1 by receiving image information obtained by the camera 64 and analyzing the received image information.

In an example, the processor 101 of the controller 100 may generate an operation control command for each component of the refrigerator 1, based on various information received from the input device 40, the communication part 50, and/or the sensor part 60. In an example, the processor 101 may control the operation of the cold air supply device 70, such as the compressor 71 and/or the expander 73, to adjust the temperature inside the storage compartment 20. In an example, the controller 100 may control the operation of each component, e.g., the compressor 71, of the cold air supply device 70 using information about the temperature of each storage compartment 20 received from the temperature sensor 61. For example, when the temperature inside the storage compartment is higher than a preset temperature, the controller 100 may lower the temperature of the storage compartment by operating the compressor 71 of the cold air supply device 70. In an example, the processor 101 may generate a command for controlling whether or how to display information through the display device 80. In an example, the processor 101 may generate a command to control to turn on the lighting device 90 of the opened storage compartment based on information about the door opening from the proximity sensor 63. For example, the processor 101 may generate a command to control the operation state of each of the above-described input device 40, communication part 50, sensor part 60, and/or lighting device 90.

In the drawings, the controller 100 is disclosed as a comprehensive component for controlling all of the components included in the refrigerator 1, but the disclosure is not limited thereto. In an example, the refrigerator 1 may be configured to include a plurality of controller components that individually control some of the components of the refrigerator 1. In an example, the refrigerator 1 may include a separate controller including a processor and a memory for controlling the operation of the cold air supply device 70 according to the output of the temperature sensor 61. In an example, the refrigerator 1 may include a separate controller including a processor and a memory for controlling the operation of a user interface according to a user input. The processor 101 of the controller 100 may include a plurality of processors, and the memory 102 may include a plurality of memory devices.

In the disclosure, the description and illustrations focus primarily on an SPM-type rotor applied mainly to outer-rotor type motors, but the disclosure is not limited thereto. The structure according to the disclosure may also be applied to SPM-type rotors for inner-rotor type motors. In the disclosure, the description focuses primarily on the case where the motor with the rotor structure according to the disclosure is applied to a closed reciprocating compressor, and such a compressor is used in a refrigerator, but this disclosure is not limited thereto. The rotor structure according to the disclosure may be applied to compressors of various configurations and electronic products using the same.

The terms as used herein are provided merely to describe some embodiments thereof, but are not intended to limit the disclosure. As used herein, the singular forms "a," "an," and "the" are intended to include the plural forms as well, unless the context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, the terms "first" and "second" may modify various components regardless of importance and/or order and are used to distinguish a component from another without limiting the components.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation.

Meanwhile, the terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments, but should rather be appreciated as covering all various modifications, equivalents, and/or substitutes of various embodiments.

## Claims

1. A motor (200) for a compressor, comprising:
one or more magnets (223);
a rotor core (221) on an inner circumferential surface of which a plurality of magnet support structures (2210a, 2210b) defining one or more magnet mounting spaces (223sa, 223sb) are disposed; and
a rotor housing (222) injection-molded and integrally coupled to the magnet (223) and the rotor core (221),
wherein each magnet (223) is inserted and disposed along a first direction in each of the magnet mounting spaces (223sa, 223sb), and
wherein each of the magnet support structures (2210a, 2210b) includes a pass hole (2214a, 2214b) on an inside thereof, through which a resin flows when the rotor housing (222) is injection-molded.

2. The motor of claim 1, wherein each of the magnet support structures (2210a, 2210b) is configured to surround at least a portion of the magnet (223) to prevent the magnet (223) disposed in the magnet mounting spaces (223sa, 223sb) from moving off the inner circumferential surface of the rotor core (221).

3. The motor of claim 2, wherein at least one of the magnet support structures (2210a, 2210b) has a 1-1th part (2211a) extending along the first direction and a hooked portion (2215) protruding from an end portion of the 1-1th part (2211a), configured to at least partially surround a side surface extending along the first direction, of the magnet (223) disposed in a magnet mounting space (223sa, 223sb) defined by the magnet support structures (2210a, 2210b).

4. The motor of claim 3, wherein the at least one of the magnet support structures (2210a, 2210b) has a 1-2th part (2212a) extending along the first direction and a hooked portion (2215) protruding from an end portion of the 1-2th part (2212a), configured to at least partially surround a side surface extending along the first direction, of the magnet (223) disposed in another magnet mounting space (223sa, 223sb) defined by the magnet support structures (2210a, 2210b).

5. The motor of claim 3 or 4, wherein the hooked portion (2215) protrudingly extends to have an inclination of 90 degrees or more with respect to the first part (2211a, 2212a) when viewed from thereabove along the first direction.

6. The motor of claim 2, wherein at least one of the magnet support structures (2210a, 2210b) includes a 2-1th part (2211b) configured to at least partially support a lower end with respect to the first direction, of the magnet (223) disposed in a magnet mounting space (223sa, 223sb) defined by the magnet support structure (2210a).

7. The motor of claim 6, wherein the at least one of the magnet support structures (2210a, 2210b) includes a 2-2th part (2212b) configured to at least partially support a lower end with respect to the first direction, of the magnet (223) disposed in another magnet mounting space (223sa, 223sb) defined by the magnet support structure (2210b).

8. The motor of claim 1, wherein the rotor core (221) includes a first core portion (221a) constituting an upper portion of the rotor core (221) and a second core portion (221b) constituting a lower portion of the rotor core (221), and
wherein the first core portion (221a) includes one or more first magnet support structure (2210a) defining a boundary along the first direction, of each of the magnet mounting spaces (223sa, 223sb), and the second core portion (221b) includes one or more second magnet support structure (2210b) defining a lower boundary in a direction perpendicular to the first direction, of each of the magnet mounting spaces (223sa, 223sb).

9. The motor of claim 8, wherein the first core portion (221a) has a coupling protrusion or a coupling recess for each first magnet support structure (2210a), and
wherein the second core portion (221b) has a structure (2217) having a shape couplable to the coupling protrusion or the coupling recess for each second magnet support structure (2210b).

10. The motor of claim 8, wherein each first magnet support structure (2210a) corresponds to a respective second magnet support structure (2210b) so that a pass hole (2214a) formed inside the first magnet support structure (2210a) and a pass hole (2214b) formed inside the corresponding second magnet support structure (2210b) are disposed to communicate with each other.

11. The motor of claim 1, wherein the rotor housing (222) is injection-molded by insert injection-molding.

12. A method for manufacturing a motor (200) for a compressor, the method comprising:
inserting and mounting each of magnets (223) in each of a plurality of magnet mounting spaces (223sa, 223sb) defined along an inner circumferential surface of a rotor core (221);
inserting the rotor core (221) having the magnets (223) mounted therein into an injection mold;
inserting a bushing (224) into the injection mold; and
injecting a resin into the injection mold to integrally couple the rotor core (221), the plurality of magnets, and the bushing (224),
wherein each of the plurality of magnet mounting spaces (223sa, 223sb) is defined by a plurality of magnet support structures (2210a, 2210b) formed on the inner circumferential surface of the rotor core (221), wherein the plurality of magnet support structures (2210a, 2210b), respectively, include pass holes (2214a, 2214b) thereinside, and
wherein injecting the resin into the injection mold includes allowing the injected resin to flow through respective pass holes (2214a, 2214b) of the plurality of magnet support structures (2210a, 2210b).

13. The method of claim 12, wherein the rotor core (221) includes a first core portion (221a) constituting an upper portion of the rotor core (221) and a second core portion (221b) constituting a lower portion of the rotor core (221), and
wherein the plurality of magnet support structures (2210a, 2210b) include a first magnet support structure (2210a) provided in the first core portion (221a) and a second magnet support structure (2210b) provided in the second core portion (221b).

14. The method of claim 13, wherein the first core portion (221a) has a coupling protrusion or a coupling recess for each first magnet support structure (2210a), and
wherein the second core portion (221b) has a structure (2217) having a shape couplable to the coupling protrusion or the coupling recess for each second magnet support structure (2210b).

15. The method of claim 13, wherein each of the first magnet support structures (2210a, 2210b) corresponds to a respective second magnet support structure (2201b) so that a pass hole (2214a) formed inside the first magnet support structure (2210a) and a pass hole (2214b) formed inside the corresponding second magnet support structure (2210b) are disposed to communicate with each other.
